# EUROPÄISCHE PATENTSCHRIFT

(11) **EP 2 198 982 B1**
(45) Veröffentlichungstag und Bekanntmachung des Hinweises auf die Patenterteilung: **18.07.2012**
(21) Anmeldenummer: 09178530.3
(22) Anmeldetag: 09.12.2009
(51) Int. Cl.: B05D 7/16, B05D 7/00

(54) **Korrosionsschutzsystem zur Beschichtung von Metalloberflächen und Verfahren zu seiner Herstellung**
Anti-corrosion system for coating metal surfaces and method for its production
Système anticorrosion destiné au revêtement de surface métalliques et son procédé de fabrication

(30) Priorität: 22.12.2008 DE 102008064182
(43) Veröffentlichungstag der Anmeldung: 23.06.2010
(73) Patentinhaber: Dresdner Lackfabrik novatic GmbH Co. KG, 01099 Dresden (DE)
(72) Erfinder: Rother, Joachim, 14532, Kleinmachnow (DE); Trültzsch, Rainer, 01640, Coswig (DE); Zill, Wilfried, 01324 Dresden (DE); Zill, Alexander, 01445, Radebeul (DE); Hentschel, Frank, 02994, Wiednitz OT Heide (DE)
(74) Vertreter: Kailuweit & Uhlemann Patentanwälte

(56) Entgegenhaltungen:
- WO-A1-2006/068493
- DE-A1-102007 020 822
- DE-U1-202008 016 853
- JP-A- 2008 272 666
- US-A1- 2004 191 555
- ELMORE J D ET AL: "Waterborne Epoxy Protective Coatings for Metal" JCT. JOURNAL OF COATINGS TECHNOLOGY, PHILADELPHIA, PA, US, Bd. 74, Nr. 931, 1. August 2002 (2002-08-01), Seiten 63-72, XP002998733 ISSN: 0361-8773

## Beschreibung

Die Erfindung betrifft ein Korrosionsschutzsystem zur Beschichtung von für Metalloberflächen von Containern und Stahlkonstruktionen, sowie ein Verfahren zur Herstellung eines solchen Korrosionsschutzsystems.

Container und Stahlbauwerke unterschiedlichster Konstruktionen sind gewöhnlich über lange Zeiträume in Nutzung. Hieraus resultiert, dass ein hochleistungsfähiges Korrosionsschutzsystem den langzeitigen Schutz des metallischen Werkstoffes übernehmen muss. Je nach zu erwartender korrosiver Beanspruchung sind hierfür Beschichtungssysteme auszuwählen, wobei deren Leistungsfähigkeit vom gewählten Bindemittel, der Stoffformulierung, der Schichtanzahl und der Schichtdicke abhängen.

Container unterliegen während ihres langen Nutzungszeitraumes, infolge des mit ihnen erfolgenden Gütertransportes, unterschiedlichsten klimatischen und korrosiven Beanspruchungen. Stahlkonstruktionen unterschiedlichster Art aus dem Bereich des Bauwesens oder Anlagenbaus haben lange Nutzungsdauern, denen Instandhaltungszyklen angepasst werden. Hieraus resultiert, dass für langlebige Objekte hochwertigste Schutzschichten zur Sicherung einer langen Nutzungsdauer bzw. großer Instandhaltungszyklen eingesetzt werden müssen.

Die korrosive Belastung von metallischen Werkstoffen ist graduell erfasst und in der DIN EN ISO 12944, Korrosionsschutz von Stahlbauten, im Teil 2 über die Korrosivitätskategorien ausgewiesen. Die höchste Schutzanforderung für ein Beschichtungssystem bei atmosphärischer Belastung, wird in der DIN EN ISO 12944 bei der Korrosivitätskategorie C5-M über eine hohe Schutzdauer ausgewiesen. Die DIN EN ISO 12944 weist für die Beanspruchung gemäß Korrosivitätskategorie C5M-hohe Schutzdauer mehrschichtige Schutzsysteme mit Gesamtschichtdicken, je nach Bindemittel von 320 µm bis 500 µm aus.

Beschichtungssysteme die ausschließlich mit wasserverdünnbaren Beschichtungsstoffen in diesen Schichtdickenbereichen hergestellt werden, sind bislang praktisch nicht in Anwendung.

Übersee-Container sind hohen korrosiven Beanspruchungen ausgesetzt. Korrosionsschutzbeschichtungen für Container müssen neben den erforderlichen Korrosionsschutzeigenschaften mechanisch robust belastbar sein und dafür über eine hohe Haftfestigkeit und dauerhafte Elastizität verfügen.

Container und Stahlkonstruktionen werden abhängig vom Einsatzgebiet mit diesem zwei- oder dreischichtigen Schutzsystem langzeitig vor Korrosion und äußeren Einflüssen geschützt.

Bei der Auswahl des Schutzsystems muss die zu erwartende Beanspruchung am Nutzungsort bzw. im Einsatzbereich des zu schützenden Objektes berücksichtigt werden, was sich in der Auswahl der einzelnen Komponenten der Beschichtung und der Schichtdicke des Schutzsystems ausdrückt.

Die erforderlichen Korrosionsschutzsysteme sind zumeist dreischichtig. Anwendung finden 1K- und 2K-Beschichtungsstoffe. Den besten Langzeitkorrosionsschutz ermöglichen 2K-Epoxidharz (EP)-Zinkstaub-Grundierungen. 2K-Polyurethan (PUR)-Deckbeschichtungen ermöglichen eine langzeitige Wetterbeständigkeit, wobei auch 1K-Acryl-Deckfarben gute Wetterbeständigkeiten ermöglichen. Für Übersee-Container liegen die Trockenschichtdicken der dreischichtigen Korrosionsschutzsysteme im Außenbereich zwischen 130 µm und 185 µm.

In automatischen Großanlagen zur Container-Fertigung sind aus technologischen Gründen derzeit lösemittelhaltige Beschichtungsstoffe im Einsatz. Die Großfertigung von Containern erfolgt in Serienfertigung, dabei sind automatische Beschichtungskabinen und Trocknungskabinen inbegriffen. Als Grundbeschichtung dominieren lösemittelhaltige 2K-EP-Zinkstaub-Grundierungen in Dreischichtsystemen mit 2K-EP-Zwischenschichten und einer 2K-PUR-Deckbe-schichtung.

Unbedingte Berücksichtigung bei der Auswahl des aufzubringenden Schutzsystems im industriellen Korrosionsschutz muss die Zeit finden, in der das komplette Schutzsystem applizierbar ist. Das heißt, aus Gründen eines schnellen und ggf. automatischen Produktionsdurchlaufes sind sehr kurze Überarbeitungszeiten der einzelnen Schichten notwendig.

Die Taktzeiten in automatischen Großanlagen der Containerfertigung sind relativ kurz, auch in den automatischen Farbspritzanlagen. Die kurzen Taktzeiten gelten für den Durchlauf in der Reihenfolge Farbspritzkabine, Trockenkabine und wiederum Spritzkabine für die Folgebeschichtung, usw. fortlaufend und verlangen bei einem Dreischichtsystem für alle aufzubringenden Beschichtungen sehr kurze Trocken- und Überarbeitungszeiten. Die zuletzt aufzubringende Beschichtung muss ebenfalls im Taktregime trocknen, wobei das gesamte Beschichtungssystem bereits nach 2 Stunden frühwasserbelastbar sein muss. Mit lösemittelhaltigen Beschichtungsstoffen sind diese Anforderungen, auch bei Taktzeiten von 10 bis 15 Minuten beherrschbar, allerdings nur bei einem Lösemittelanteil von über 50%.

Der Nachteil bei der Verwendung von lösemittelhaltigen bzw. lösemittelarmen Systemen auf 2K-Basis mit einem Lösemittelgehalt von unter 40% liegt bei der Applikation mehrerer Schichten in der notwendigen längeren Wartezeit vor dem Aufbringen der nächsten Schicht.

Ein weiterer Nachteil von lösemittelhaltigen bzw. lösemittelarmen 2K-Systemen im industriellen Bereich mit oft sehr großen Mengen an verarbeiteten Beschichtungsstoffen liegt in der beträchtlichen Lösemittelemission. Je weniger Lösemittel solche 2K-Systeme allerdings insgesamt enthalten, umso längere Überarbeitungszeiten der einzelnen Schichten müssen einkalkuliert werden. Insbesondere dann, wenn aus Gründen der UV-Stabilität eine Deckbeschichtung auf Basis von Polyurethan (PUR) aufgebracht werden soll. Bei sehr kurzer Überarbeitungszeit der vorhergehenden EP-Beschichtung mit der Polyurethan(PUR)-Deckbeschichtung kann es zu Nebenreaktionen und damit zu Oberflächenstörungen in der Deckbeschichtung kommen. Die schnelle, industrielle Applikation eines umweltgerechten Mehrschichtsystems mit hoher Schutzwirkung gemäß Korrosivitätskategorie C5-I bzw. C5-M hohe Schutzdauer konnte deshalb in der Praxis bisher nicht verwirklicht werden.

Wasserverdünnbare 1K- und 2K-Beschichtungsstoffe werden derzeit innerhalb der Containerfertigung genutzt, wenn die Beschichtung manuell in Spritzkabinen mit den erforderlichen Trocken- bzw. Überarbeitungszeiten erfolgt.

Wasserverdünnbare 2K-EP-Zinkstaub-Grundierungen, für Zwischenbeschichtungen, wasserverdünnbare 1K-Acryl-Beschichtungs-stoffe oder 2K-EP-Beschichtungssstoffe und für die Deckbeschichtung wasserverdünnbare 1K- Beschichtungsstoffe auf Acryl-Basis oder 2K-Beschichtungsstoffe auf PUR-Basis sind bekannt, sind aber technologisch in automatische Farbspritzanlagen mit den üblichen kurzen Taktzeiten bis zur Folgebeschichtung, infolge der erforderlichen sehr kurzen Trocknungs- und Überarbeitungszeiten, bisher nicht einsetzbar.

Die DE 4336012 A1 beschreibt ein Beschichtungsmittel und seine Verwendung für die Innenbeschichtung von Containern. Kennzeichnend ist hier ein Beschichtungsmittel, das aus einer Basiskomponente und einem Härter besteht, wobei in der Basiskomponente synthetischer Eisenglimmer eingesetzt wird. Als Bindemittel für die Basiskomponente wird eine Epoxidharz-Dispersion verwendet, für den Härter ein Amin-Addukt. Im dargestellten Beispiel fungiert ein modifiziertes Zink-Aluminiumphosphat als aktives Korrosionsschutzpigment.

In der DE 10142687 A1 werden wasserverdünnbare Korrosionsschutz-Beschichtungsstoffe beschrieben, die mindestens eine wasserverdünnbare, radikalisch polymerisierbare Verbindung und mindestens eine wasserdispergierbare polymerisierbare nachvernetzende Verbindung und mindestens eine bei Einwirkung von aktinischer Strahlung freie Radikale bildende wasserdispergierbare Verbindung enthält, die miteinander aushärten. Beschrieben wird ein Korrosionsschutzprimer auf Basis Polyesterharz oder/und Epoxidharz das aus einer Mischung von 70 bis 95 % Zink, Aluminium, Graphit oder/und Molybdänsulfid und Korrosionsschutzpigmenten sowie aus 5 bis 30 % eines organischen Bindemittels ggf. Additiven, bezogen auf den Trockenfilm, besteht. Als Deckbeschichtungen finden spezielle wasserverdünnbare 2K-PUR-Lacke Verwendung. Die Beschichtungen härten mittels UV-Strahlung, chemischer Nachvernetzung und gegebenenfalls mit zusätzlicher Erwärmung aus.

In der EP-A 0 761 320 werden beschichtete Stahlbleche aufgeführt, die eine organische Schutzschicht besitzen, die durch elektrolytische Polymerisation von ionogenen polymerisierbaren organischen Verbindungen aus wässriger Lösung erzeugt wurden.

Die DE 10 2005 061 318 A1 betrifft eine Zubereitung und ein Verfahren zum Aufbringen von Korrosionsschutzschichten auf metallische Oberflächen, wobei die Zubereitung mindestens ein unter atmosphärischen Bedingungen härtbares Bindemittelsystem, ein Dicarbonsäure-Olefin-Copolymeres sowie einen feinteiligen Füllstoff, ein Pigment oder einen Farbstoff umfasst. Beinhaltet sind als Bindemittel Dispersionen von Polyacrylaten, Styrol-Acrylat-Copolymeren, Styrol-Alkadien-Polymeren, Polyurethanen oder Alkydharzen. Es werden mit diesen Bindemitteln dreischichtige Beschichtungssysteme gebildet, die auch für die Beschichtung von Containern und Stahlkonstruktionen vorgeschlagen werden. Die beschichteten metallischen Oberflächen können dabei mindestens einer Korrosionsbelastung der Kategorie C 2 gemäß DIN EN ISO 12944 ausgesetzt werden.

Die EP-A 157 133 offenbart eine Bindemittelzusammensetzung für wässrige Korrosionsschutzanstriche, welche eine wässrige Dispersion von Poly(meth)acrylat-Copolymeren sowie Zinkkomplexsalze von polymeren Polycarbonsäuren umfasst. Die Formulierungen können auch Korrosionsinhibitoren sowie Korrosionsschutzpigmente umfassen.

Die WO 99/46337 offenbart eine wässrige Polymerdispersion, beispielsweise aus Alkyl(meth)acrylaten, Vinylestern oder Vinylaromaten, in Verbindung mit einem Phosphatgruppen aufweisenden Emulgator sowie deren Verwendung als Bindemittel für Anstrichfarben oder Korrosionsschutzlacke.

Die US 6,090,894 offenbart OH-funktionalisierte Copolymere sowie deren Verwendung zur Herstellung von Lacken zur Beschichtung von Metallen oder Kunststoffen. Die OH-funktionellen Copolymere werden durch polymeranaloge Umsetzung von Epoxyverbindungen mit COOH-gruppenhaltigen Copolymeren aus Maleinsäuremono- oder Diestern und α-Olefin- Carbonsäuren sowie gegebenenfalls weiteren Monomeren enthalten. Bei Epoxy-Verbindungen kann es sich beispielsweise um Glycidylverbindungen, Ethylenoxid oder bevorzugt Propylenoxid handeln.

Der Erfindung liegt die Aufgabe zugrunde, ein industriell anwendbares Korrosionsschutzsystem unter Verwendung wasserverdünnbarer Komponenten sowie ein Verfahren zu dessen Herstellung anzugeben, welches durch manuelle oder automatische Lackierprozesse applizierbar ist und außerordentlich kurze Überarbeitungsintervalle zwischen den einzelnen Schichten ermöglicht, wobei eine hohe Korrosionsschutzwirkung von C5-I bzw. C5-M und eine hohe Schutzdauer gemäß DIN ISO 12944 erreicht werden soll. Diese Eigenschaften sind mit hoher Umweltfreundlichkeit möglichst geringer Lösemittelemission zu kombinieren.

Erfindungsgemäß wird die Aufgabe durch ein dreischichtiges Korrosionsschutzsystem gemäß dem unabhängigen Anspruch 1 gelöst. Weitere vorteilhafte Ausgestaltungen gehen aus den zugehörigen Unteransprüchen hervor.

Alternativ wird die Aufgabe durch ein zweischichtiges Korrosionsschutzsystem gemäß den unabhängigen Anspruch 5 gelöst. Vorteilhafte Ausgestaltungen gehen aus den zugehörigen Unteransprüchen hervor.

Die dieser Erfindung zugrundeliegende Aufgabe wird weiterhin gelöst durch ein Verfahren zur Erzeugung eines Korrosionsschutzsystems gemäß dem unabhängigen Anspruch 10. Weitere vorteilhafte Ausgestaltungen sind den abhängigen Ansprüchen zu entnehmen.

Bei dem erfindungsgemäßen Verfahren wird die Grundbeschichtung aus einer wasserverdünnbaren 2K-Epoxidharz-HärterKombination mit Zinkstaubanteil nach bereits 10-15 Minuten mit einer gleichfalls wasserverdünnbaren Zwischenbeschichtung auf Basis eines acrylierten EP-Harzes mit aktiver Korrosionsschutzpigmentierung und Inhibitoren überarbeitet. Nach weiteren 15 Minuten wird die dekorativ anspruchsvolle wasserverdünnbare Deckbeschichtung auf Basis einer Acrylharz-Harz-Kombination mit acyliertem EP-Harz aufgebracht. Dieses Beschichtungssystem zeichnet sich nach Fertigstellung zusätzlich durch eine hohe Frühwasserbeständigkeit bereits nach 2 Stunden aus.

Für ein solches Beschichtungssystem ist nur noch ein geringer Zeitaufwand erforderlich, da die Konzeption der Einzelschichten das Überarbeiten jeweils nach außerordentlich kurzer Zeit fehlerfrei ermöglicht.

Die vorliegenden Beschichtungssysteme bestehen aus mehreren Schutzschichten mit unterschiedlichen Funktionen. Von der Grundbeschichtung wird eine hohe Haftfestigkeit auf dem gestrahlten Metalluntergrund verlangt. Diese muss sowohl als Shopprimer einsetzbar sein als auch die Funktion der eigentlichen Grundbeschichtung erfüllen. Die Grundbeschichtung muss durch ihren Zinkstaubanteil im Pigment das darunter liegende Substrat auch elektrochemisch vor Korrosion schützen. Die Zwischenbeschichtung hat die Funktion einer Diffusionssperre und enthält ebenfalls aktive Korrosionsschutzpigmente und Inhibitoren. Die Deckbeschichtung muss eine langzeitige und sehr gute Wetterbeständigkeit mit UV-Stabilität besitzen. Daraus resultieren vorzugsweise gute dekorative Eigenschaften wie Glanzhaltung und Farbtonstabilität sowie eine geringe Alterung und ein geringer Schichtabbau.

Anwendungsbereiche für die vorliegenden Systeme sind die Beschichtung und der Schutz von Containern aller Art und Transportmitteln, die im maritimen Einflussbereich eingesetzt werden.

Ferner können Stahlkonstruktionen aller Art, die einer Belastung gemäß DIN EN ISO 12944 C5-I bzw. C5-M hohe Schutzdauer unterliegen, geschützt werden.

Für die Erfindung ist es wesentlich, dass die Folgeschichten bereits nach jeweils 10-15 Minuten auf die vorhergehende Schicht aufgebracht werden können, ohne den Anspruch des Systems bezüglich Korrosionsschutz und optische Eigenschaften negativ zu beeinflussen. Das wird dadurch erreicht, dass die einzelnen Schichten bestmöglich aufeinander abgestimmt sind und durch die spezielle Formulierung eine außerordentlich rasche Wasserabgabe bei gleichzeitig optimaler Filmbildung gewährleisten. Die Beschichtung erfolgt vorteilhafterweise bei Temperaturen zwischen 8°C bis 30°C und einer relativen Luftfeuchte von 40 % bis 80 %.

Eine besonders vorteilhafte Formulierung der wasserverdünnbaren 2K-Epoxid-Grundbeschichtung besteht in der ausgewählten 2K-EP-Harz/Härter-Kombination, wobei das EP-Harz eine Epoxid-Äquivalentmasse von größer 400 hat und der Härter ein Polyamin-Addukt und/oder ein Polyamino-Amid mit einem Aminäquivalent von größer 120 ist.

Eine solche Grundbeschichtung weist einen EP-Harz-Gehalt von 8 bis 25 % und einen Härteranteil von 1 bis 10 % auf, aus dem ein Mischungsverhältnis im Bereich von 2:1 bis 8:1 resultiert. Die Epoxidharz-Härterkombination in Verbindung mit der gewählten Pigmentierung, darunter mehr als 65 % Zinkstaub, einer Pigment-Volumen-Konzentration (PVK) im Bereich von 10 bis 50 Vol.% und speziellen Colösern führt zu der extrem schnellen Trocknung und Überarbeitbarkeit in einem Trockenschichtdickenbereich von 10 µm bis 100 µm.

Als Colöser werden polare Lösemittel, die mit Wasser teilweise oder vollständig mischbar sind, eingesetzt. Bevorzugt Anwendung finden Monoalkylether von Ethylenglycol, Diethylenglycol und Propylenglycol, wie das Butylglycol sowie verschiedene Alkohole und Ketone. Colöser beeinflussen weiterhin so wichtige Eigenschaften wie Pigment- und Substratbenetzung, Trocknungsverlauf und Verfilmung.

Die schnelltrocknende Zwischenbeschichtung des Korrosionsschutzsystems für Container und Stahlkonstruktionen auf Basis eines acrylierten Epoxidharzes wird in der Weise formuliert, dass der Bindemittelgehalt zwischen 15 und 30 Gew.% beträgt und eine Gerüstbildung unter Verwendung von lamellaren und sphärischen Pigmenten und Füllstoffen, Korrosionsschutzpigmenten und organischen Inhibitoren stattfindet. Die PVK hat einen Bereich von 10 Vol.% bis 60 Vol.%.

In besonders vorteilhafter Weise kommen Deckbeschichtungen zum Einsatz, die auf einer genau abgestimmten Kombination aus Acrylharz und acrylierten Epoxidharzen bestehen, wobei deren Bindemittelzusammensetzung aus 30 bis 70 Gew.% acryliertem Epoxidharz in Kombination mit 70 bis 30 Gew.% Acrylharz bestehen kann. Die Pigmentierung besteht aus lamellaren und sphärischen Pigmenten und Füllstoffen. Die PVK kann sich in einem Bereich von 10-50 Vol.% bewegen.

Daraus ergeben sich schnelltrocknende, dichte, nicht wasserquellbare Deckbeschichtungen, die insgesamt zu rasch frühwasserbeständigen Gesamtbeschichtungen führen. Es resultieren Schutzschichten, die bereits nach 2 Stunden frühwasserbeständig sind. Der gesamte Mehrschichtaufbau mit einer Trockenschichtdicke im Bereich von 120 µm erreicht in Korrosionskurzprüfungen gemäß DIN EN ISO 12944 die Korrosivitätskategorie C5-I bzw. C5-M und eine hohe Schutzdauer.

Das erfindungsgemäß beschriebene System bestehend aus 2-3 Einzelschichten kann überraschenderweise auch als Dreischichtaufbau im Abstand jeweils 10-15 Minuten je Einzelschicht innerhalb von 45 Minuten komplett aufgebracht werden. Das gilt für allgemein großtechnisch angewandte Spritzverfahren wie Airless, Airless mit Zusatzluft sowie für HVLP und Hochdruckspritzverfahren, dabei gleichermaßen für manuelle und automatische Spritzverfahren. Es werden z.B. zwischen 10 und 100 µm je Einzelschicht aufgetragen, die zusammen idealerweise eine Schichtdicke von 30 bis 150 µm für den Zweischichtaufbau und 70 bis 300 µm für den Dreischichtaufbau ergeben.

Das erfindungsgemäß beschriebene System weist mit der angegebenen zeitlichen Abfolge und Arbeitsweise im Gesamtaufbau für das Dreischichtsystem eine Trockenschichtdicke von 70 bis 300 µm, bevorzugt um 120 µm auf, welches überraschenderweise bereits 2 Stunden nach Applikationsende eine hohe Frühwasserbeständigkeit hat, die einen für einkomponentige und physikalisch trocknende Beschichtungen untypisch frühen Wert darstellen. Für das Zweischichtsystem werden erfindungsgemäß Schichtdicken im Bereich von 30 bis 150 µm, bevorzugt um 90 µm erreicht.

Weiterhin weist das erfindungsgemäß beschriebene System eine überraschend hohe Korrosionsschutzwirkung auf, die gemäß DIN EN ISO 12944 der Korrosivitätskategorie C5-I bzw. C5-M hohe Schutzdauer entspricht und im Allgemeinen nur von komplett zweikomponentigen Systemen mit deutlich höheren Schichtdicken erreicht wird.

Von besonderem Vorteil ist die Nutzung der erfindungsgemäßen System- und Verfahrenslösung für den Anwender, wo einerseits große Flächen auf industriellem Wege in kurzen und getakteten Intervallen beschichtet werden müssen, die gleichzeitig aber bei geringst möglichen Schichtdicken mit einem hohen Korrosionsschutz und sehr niedriger Lösemittelemission verbunden werden müssen. Die Beschichtungsstoffe des Beschichtungssystems werden innerhalb eines industriellen Beschichtungsablaufs luftgetrocknet über 5°C bis 30 °C Lufttemperatur appliziert.

Die Applikation erfolgt mittels bekannter Applikationsarten, wie Airless-, Airless mit Luftunterstützung, HVLP (High Volume Low Pressure)- oder Hochdruckspritzen in einer automatischen Anlage oder auf manuellem Wege.

In einer alternativen Ausführungsform kann im Temperaturbereich von 10°C bis 80°C normal oder forciert wärmegetrocknet werden, wobei die Beschichtungsstoff-Zusammensetzungen eine schnelle Wasserabgabe über eine isenthalpe oder isotherme Temperaturführung während des Trocknungsprozesses ermöglichen.

Die Erfindung soll nachfolgend anhand einiger Ausführungs- und Beschichtungsstoffbeispiele noch näher erläutert werden.

### Beispiel 1: Verfahrensbeispiel 1 (Dreischichtaufbau):

Die Metalloberfläche ist vor der Beschichtung in üblicher Form wie in DIN EN ISO 12944-4 vorzubereiten.

Es erfolgt zunächst das Aufbringen einer Primerschicht unter automatisierten Bedingungen in der Weise, dass die zu beschichtenden Oberfläche mit gleichmäßiger Vorschubgeschwindigkeit an der Lackiereinrichtung vorbeiläuft und einen Auftrag des wasserverdünnbaren 2K-EP-Beschichtungsstoffes mit Zinkstaubanteil in Höhe von ca. 10 µm Trockenschichtdicke.

Die so beschichteten Oberflächen in Form von gewalztem Material können geformt und geschweißt werden. Auf die beschichtete und verformte Oberfläche wird anschließend unter Beachtung einer gründlichen Nachreinigung der wasserverdünnbare 2K-EP-Beschichtungsstoff mit Zinkstaubanteil in einer Trockenschichtdicke von 20 bis 90 µm, vorzugsweise 20-30 µm, erneut aufgetragen. Die Auftragung erfolgt mit Airless-Spritzen in einer automatischen Anlage.

Nach 10-15 Minuten wird als Zwischenbeschichtungsmaterial eine schnelltrocknende Beschichtung auf Basis eines acrylierten Epoxidharzes aufgebracht, in der Weise formuliert, dass der Bindemittelgehalt zwischen 15 und 30 Gew. % beträgt und eine Gerüstbildung unter Verwendung von lamellaren und sphärischen Pigmenten und Füllstoffen, Korrosionsschutzpigmenten und organischen Inhibitoren stattfindet. Die aufgebrachte Trockenfilmdicke beträgt etwa 50 µm. Die PVK hat einen Bereich von 10 Vol % bis 60 Vol %. Die Auftragung erfolgt mittels Airless-Spritzen in einer automatischen Anlage.

Nach weiteren 10-15 Minuten wird ein Deckbeschichtungsmaterial mit einer Trockenfilmdicke im Bereich von 40 µm aufgetragen, welches aus einer genau abgestimmten Kombination aus Acrylharz und acrylierten Epoxidharzen besteht, wobei deren Bindemittelzusammensetzung aus 30 bis 70 Gew. % acryliertem Epoxidharz in Kombination mit 70 bis 30 Gew. % Acrylharz bestehen kann. Die Pigmentierung besteht aus lamellaren und sphärischen Pigmenten und Füllstoffen Die PVK kann sich in einem Bereich von 10-50 Vol. % bewegen. Die Auftragung erfolgt mittels Airless-Spritzen in einer automatischen Anlage.

Aus dieser Verfahrensweise und Stoffkombination ergibt sich insgesamt ein für Großverarbeiter VOC-gerechtes, industriell applizierbares, schnelltrocknendes, dichtes, nicht wasserquellbares Beschichtungssystem, welches bereits nach 2 Stunden frühwasserbeständig ist.

Der gesamte Mehrschichtaufbau basiert auf umweltfreundlichen Einzelbeschichtungen und erreicht mit einer Gesamt-Trockenschichtdicke von 120 µm in Korrosionskurzprüfungen gemäß DIN EN ISO 12944 die Korrosivitätskategorie C5-I bzw. C5-M hohe Schutzdauer.

### Beispiel 2: Verfahrensbeispiel 2 (Zweischichtaufbau) :

Die Metalloberfläche ist vor der Beschichtung in üblicher Form wie in DIN EN ISO 12944-4 vorzubereiten.

Es erfolgt zunächst das Aufbringen einer Primerschicht unter automatisierten Bedingungen in der Weise, dass die zu beschichtenden Oberfläche mit gleichmäßiger Vorschubgeschwindigkeit an der Lackiereinrichtung vorbeiläuft und ein Auftrag des wasserverdünnbaren 2K-EP-Beschichtungsstoffes mit Zinkstaubanteil in Höhe von ca. 10 µm Trockenschichtdicke erfolgt.

Die so beschichteten Oberflächen in Form von gewalztem Material können geformt und geschweißt werden. Auf die beschichtete und verformte Oberfläche wird anschließend unter Beachtung einer gründlichen Nachreinigung der wasserverdünnbare 2K-EP-Beschichtungsstoff mit Zinkstaubanteil in einer Trockenschichtdicke von 20 bis 90 µm, vorzugsweise 20-30 µm, erneut aufgetragen. Die Auftragung erfolgt mittels Airless-Spritzen in einer automatischen Anlage.

Nach 10-15 Minuten wird als Deckbeschichtungsmaterial eine schnelltrocknende Beschichtung auf Basis eines acrylierten Epoxidharzes, oder einer Kombination aus Acrylharz und acrylierten Epoxidharzen aufgebracht, wobei deren Bindemittelzusammensetzung aus 30 bis 70 Gew. % acryliertem Epoxidharz in Kombination mit 70 bis 30 % Acrylharz besteht, in der Weise formuliert, dass der Bindemittelgehalt zwischen 15 und 30 Gew. % beträgt und wahlweise auch eine Gerüstbildung unter Verwendung von lamellaren und sphärischen Pigmenten und Füllstoffen, Korrosionsschutzpigmenten und organischen Inhibitoren stattfindet. Die aufgebrachte Trockenfilmdicke liegt zwischen 30 und 100 µm, vorzugsweise 40 bis 50 µm. Die PVK hat einen Bereich von 10 Vol % bis 60 Vol %. Die Auftragung erfolgt mittels Airless-Spritzen in einer automatischen Anlage.

### Beispiel 3: Beschichtungsstoffbeispiel 1:

Die Metalloberfläche ist vor der Beschichtung in der üblichen Form, wie in der DIN EN ISO 12944-4 beschrieben, vorzubereiten.

Die Grundbeschichtung erfolgt mit einer wasserverdünnbaren 2K-EP- Zinkstaubgrundierung. Diese 2K-EP-Zinkstaubgrundierung basiert auf einer Grundbeschichtung mit einem wasseremulgierbaren A/F-Flüssig-EP-Harz mit einer Epoxid-Äquivalentmasse von größer 450 und einem Polyamin-Addukt Härter mit einem Aminäquivalent von 130, pigmentiert mit einem Gemisch bestehend aus Zinkstaub 91 Gew.%, Korrosionsinhibitor 0,5 Gew.%, Graphitpulver 4 Gew.%, Aluminium-Paste 3,5 Gew.%, Aerosil 1 Gew.%. Das Mischungsverhältnis der Harz:Härter-Komponente beträgt 10:1.

Diese wasserverdünnbare 2K-EP-Zinkstaubgrundierung wird auf die vorbereitete metallische Oberfläche appliziert, so dass eine Trockenschichtdicke von etwa 50 µm resultiert.

Nach 10 Minuten wird die Grundbeschichtung mit der wasserverdünnbaren, Zwischenbeschichtung auf Basis eines acrylierten Epoxidharzes überbeschichtet.

Die Zwischenbeschichtung auf Basis eines acrylierten Epxidharzes weist einen Bindemittelgehalt von 22 Gew.% auf und wird pigmentiert bis zu einer PVK 45 Vol.%. Die Pigment-Füllstoff-Kombination besteht dabei aus: Titandioxid 20 Gew.%, Mikrotalkum 40 Gew.%, Omyacarb 28 Gew.%, Zinkphosphat 10 Gew.%, Korrosionsinhibitor 0,5 Gew.%, Montmorillonit 1,5 Gew.%.

Der wasserverdünnbare Zwischenbeschichtungsstoff wird auf die Grundbeschichtung mit einer Trockenschichtdicke von etwa 30 µm appliziert.

Nach 15 Minuten wird die Zwischenbeschichtung mit der wasserverdünnbaren Deckbeschichtung auf Basis einer Kombination aus Acrylharz und acrylierten Epoxidharzen überschichtet.

Die Deckbeschichtung besteht aus einer Kombination von acryliertem Epoxidharzen und Acrylharz, in der Zusammensetzung 60 Gew.% acryliertes Epoxidharz in Kombination mit 40 Gew.% Acrylharz bestehen. Die PVK beträgt 35 Vol.%. Die Pigment-Füllstoff-Kombination besteht dabei aus Titandioxid 70 Gew.%, Mikrotalkum 10 Gew.%, Omyacarb 20 Gew.%. Appliziert wird eine Trockenschichtdicke im Bereich von 40 µm.

Es resultiert eine Gesamtschichtdicke von 120 µm. Die Gesamtbeschichtung ermöglicht einen sehr guten Korrosionsschutz gemäß Anforderungen DIN EN ISO 12944 für C5-I lang und C5-M hohe Schutzdauer.

### Beispiel 4: Beschichtungsstoffbeispiel 2:

Die Metalloberfläche ist vor der Beschichtung in der üblichen Form, wie in der DIN EN ISO 12944-4 beschrieben, vorzubereiten.

Die Grundbeschichtung erfolgt mit einer wasserverdünnbaren 2K-EP- Zinkstaubgrundierung. Diese 2K-EP-Zinkstaubgrundierung basiert auf einer Grundbeschichtung mit einem wasseremulgierbaren A/F-Flüssig-EP-Harz mit einer Epoxid-Äquivalentmasse von größer 450 und einem Polyamin-Addukt Härter mit einem Aminäquivalent von größer 120, pigmentiert mit einem Gemisch bestehend aus Zinkstaub 98 Gew.%, Korrosionsinhibitor 0,5 Gew.%, Aluminium-Paste 0,5 Gew.%, Aerosil 1 Gew.%. Das Mischungsverhältnis der Harz:Härter-Komponente beträgt 10:1.

Diese wasserverdünnbare 2K-EP-Zinkstaubgrundierung wird auf die vorbereitete metallische Oberfläche appliziert, so dass eine Trockenschichtdicke im Bereich von 40 µm resultiert.

Nach 10 Minuten wird die Grundbeschichtung mit der wasserverdünnbaren, Zwischenbeschichtung auf Basis eines acrylierten Epoxidharzes überbeschichtet.

Die Zwischenbeschichtung auf Basis eines acrylierten Epoxidharzes weist einen Bindemittelgehalt von 22 Gew.% auf und wird pigmentiert bis zu einer PVK 50 Vol.%. Die Pigment-Füllstoff-Kombination besteht dabei aus Titandioxid 20 Gew.%, Mikrotalkum 40 Gew.%, Omyacarb 28 Gew.%, Zinkphosphat 10 Gew.%, Korrosionsinhibitor 0,5 Gew.%, Montmorillonit 1,5 Gew.%.

Der wasserverdünnbare Zwischenbeschichtungsstoff wird auf die Grundbeschichtung mit einer Trockenschichtdicke von etwa 40 µm appliziert.

Nach 10 Minuten wird die Zwischenbeschichtung mit der wasserverdünnbaren Deckbeschichtung auf Basis einer Kombination aus Acrylharz und acrylierten Epoxidharzen überschichtet.

Die Deckbeschichtung besteht aus einer Kombination von acryliertem Epoxidharzen und Acrylharz, in der Zusammensetzung 60 Gew.% acryliertes Epoxidharz in Kombination mit 40 Gew.% Acrylharz bestehen. Die PVK beträgt 30 Vol.%. Die Pigment-Füllstoff-Kombination besteht dabei aus Titandioxid 70 Gew.%, Mikrotalkum 10 Gew.%, Omyacarb 20 Gew.%.

Appliziert wird eine Trockenschichtdicke von etwa 40µm. Es resultiert eine Gesamtschichtdicke im Bereich von 120 µm. Die Gesamtbeschichtung ermöglicht einen sehr guten Korrosionsschutz gemäß Anforderungen DIN EN ISO 12944 für C5-I lang und C5-M hohe Schutzdauer.

## Patentansprüche

1. Korrosionsschutzsystem zur Beschichtung von Metalloberflächen von Containern und Stahlkonstruktionen, umfassend eine
- wasserverdünnbare 2K-EP-Zinkstaub-Grundbeschichtung basierend auf einer ausgewählten 2K-EP-Harz/Härter-Kombination, wobei das EP-Harz eine Epoxid-Äquivalentmasse von grösser 400 g/mol hat und als Härter ein Polyamin-Addukt und/oder Polyamino-Amid mit einem Aminäquivalent von grösser 120 g/Äqu eingesetzt wird und
- eine wasserverdünnbare Zwischenbeschichtung auf Basis eines acrylierten Epoxidharzes mit lamellaren und sphärischen Pigmenten und Füllstoffen, Korrosionsschutzpigmenten und organischen Inhibitoren bei einer Pigment-Volumen-Konzentration von 10-60 Vol.%, sowie
- eine wasserverdünnbare Deckbeschichtung basierend auf einem nicht wasserquellbarer 1K-acrylierten Epoxidharz in Kombination mit einem Acrylharz, deren Bindemittelzusammensetzung aus 30 Gew.% bis 70 Gew.% acryliertes Epoxidharz in Kombination mit 70 Gew.% bis 30 Gew.% Acrylharz besteht.

2. Korrosionsschutzsystem nach Anspruch 1 , **dadurch gekennzeichnet, dass** die 2K-EP-Zinkstaub-Grundbeschichtung aus einer wasserverdünnbaren 2K-EP-Zinkstaubgrundierung mit einem EP-Harz-Gehalt von 8 bis 25 %, einem Härteranteil von 1-10 %, aus dem ein Mischungsverhältnis im Bereich von 2:1 bis 8:1 resultiert, sowie einer Pigment-Volumen-Konzentration im Bereich von 10-50 Vol.% und Colösern besteht.

3. Korrosionsschutzsystem nach Anspruch 1, **dadurch gekennzeichnet, dass** die Deckbeschichtung aus acryliertem Epoxidharz in Kombination mit einem Acrylharz und mit Pigmenten, Füllstoffen und Farbstoffen in einer Pigment-Volumen-Konzentration im Bereich von 10-50 Vol.% besteht.

4. Korrosionsschutzsystem nach den Ansprüchen 1 bis 3, **dadurch gekennzeichnet, dass** das Korrosionsschutzsystem eine Gesamt-Trockenschichtdicke im Bereich von 70 bis 300 µm bei einer Einzeltrockenschichtdicke von 10 µm bis 100 µm aufweist.

5. Korrosionsschutzsystem zur Beschichtung von Metalloberflächen von Containern und Stahlkonstruktionen, umfassend eine
- wasserverdünnbare 2K-EP-Zinkstaub-Grundbeschichtung basierend auf einer ausgewählten 2K-EP-Harz/Härter-Kombination, wobei das EP-Harz eine Epoxid-Äquivalentmasse von grösser 400 g/mol hat und als Härter ein Polyamin-Addukt und/oder Polyamino-Amid mit einem Aminäquivalent von grösser 120 g/Äqu aufweist, sowie
- eine wasserverdünnbare Deckbeschichtung basierend auf einem nicht wasserquellbarer 1K-acrylierten Epoxidharz in Kombination mit einem Acrylharz, deren Bindemittelzusammensetzung aus 30 Gew.% bis 70 Gew.% acryliertes Epoxidharz in Kombination mit 70 Gew.% bis 30 Gew.% Acrylharz besteht.

6. Korrosionsschutzsystem nach Anspruch 5, **dadurch gekennzeichnet, dass** die 2K-EP-Zinkstaub-Grundbeschichtung aus einer wasserverdünnbaren 2K-EP-Zinkstaubgrundierung mit einem EP-Harz-Gehalt von 8 bis 25 %, einem Härteranteil von 1-10 %, aus dem ein Mischungsverhältnis im Bereich von 2:1 bis 8:1 resultiert, sowie einer Pigment-Volumenkonzentration im Bereich von 10-50 Vol.% und Colösern besteht.

7. Korrosionsschutzsystem nach Anspruch 5, **dadurch gekennzeichnet, dass** die Deckbeschichtung aus acryliertem Epoxidharz in Kombination mit einem Acrylharz und mit Pigmenten, Füllstoffen und Farbstoffen in einer Pigment-Volumen-Konzentration im Bereich von 10-50 Vol.% besteht.

8. Korrosionsschutzsystem nach den Ansprüchen 5 bis 7, **dadurch gekennzeichnet, dass** das Korrosionsschutzsystem aus einem Zweischichtsystem besteht, wobei die Gesamt-Trockenschichtdicke im Bereich von 30 bis 150 µm bei einer Einzeltrockenschichtdicke von 10 bis 100 µm beträgt.

9. Korrosionsschutzsystem nach den Ansprüchen 1 bis 8, **dadurch gekennzeichnet, dass** das Korrosionsschutzsystem nach 2 Stunden frühwasserbeständig ist.

10. Verfahren zur Erzeugung eines Korrosionsschutzsystems für Metalloberflächen, **dadurch gekennzeichnet, dass**
- zunächst eine Grundierung der Container und Stahlkonstruktionen mit einer wasserverdünnbare 2K-EP-Zinkstaub-Grundbeschichtung basierend auf einer ausgewählten 2K-EP-Harz/Härter-Kombination vorgenommen wird, wobei das EP-Harz eine Epoxid-Äquivalentmasse von grösser 400 g/mol hat und als Härter ein Polyamin-Addukt und/oder Polyamino-Amid mit einem Aminäquivalent von grösser 120 g/Äqu eingesetzt wird,
- dass nachfolgend auf die Grundierungsschicht eine wasserverdünnbare Zwischenbeschichtung auf Basis eines acrylierten Epoxidharzes mit lamellaren und sphärischen Pigmenten und Füllstoffen, Korrosionsschutzpigmenten und organischen Inhibitoren bei einer Pigment-Volumen-Konzentration von 10-60 Vol.% aufgebracht wird, sowie
- dass auf die Zwischenbeschichtung eine wasserverdünnbare Deckbeschichtung basierend auf einem nicht wasserquellbarer 1K-acrylierten Epoxidharz in Kombination mit einem Acrylharz, deren Bindemittelzusammensetzung aus 30 Gew.% bis 70 Gew.% acryliertes Epoxidharz in Kombination mit 70 Gew.% bis 30 Gew.% Acrylharz besteht, aufgebracht wird, wobei die Trocknungszeit der einzelnen Schichten des Beschichtungssystems um 15 Minuten beträgt..

11. Verfahren nach Anspruch 10, **dadurch gekennzeichnet, dass** die Applikation des Korrosionsschutzsystems bei Temperaturen zwischen 5°C und 30°C erfolgt.

12. Verfahren nach den Ansprüchen 10 und 11, **dadurch gekennzeichnet, dass** die einzelnen Schichten des Korrosionsschutzsystems nach Applikation getrocknet werden.

13. Verfahren nach Anspruch 12, **dadurch gekennzeichnet, dass** die einzelnen Schichten des Korrosionsschutzsystems nach Applikation luftgetrocknet werden.

14. Verfahren nach den Ansprüchen 10 bis 13, **dadurch gekennzeichnet, dass** jede Schichten des Korrosionsschutzsystems nach Applikation im Temperaturbereich von 10°C bis 80°C luftgetrocknet werden.

15. Verfahren nach den Ansprüchen 10 bis 12, **dadurch gekennzeichnet, dass** die einzelnen Schichten des Korrosionsschutzsystems nach Applikation im Temperaturbereich von 10°C bis 80°C forciert wärmegetrocknet werden.

16. Verfahren nach den Ansprüchen 10 bis 15, **dadurch gekennzeichnet, dass** die Gesamttrocknungszeit des Korrosionsschutzsystems um 45 Minuten beträgt.

## Claims

1. Anti-corrosion system for coating of metal surfaces of containers and steel structures, comprising
- a water dilutable two components epoxy zinc dust basic coating based on a selected combination of a two components epoxy-resin and a hardener, wherein the epoxy-resin exhibits an epoxide equivalent weight of greater than 400 g/mol and wherein a polyamine adduct and/or polyamino amide with an amine equivalent of greater than 120 g/equ is employed as hardener,
- a water dilutable intermediate coating based on an acrylated epoxide resin with lamellar and spherical pigments and fillers, anti-corrosive pigments and organic inhibitors at a pigment-volume-concentration of 10 - 60 vol.%, and
- a water dilutable top coating based on a non water-swellable one component-acrylated epoxide resin in combination with an acrylic resin, wherein the binder composition of the top coating consists of 30 wt.% to 70 wt.% acrylated epoxide resin in combination with 70 wt.% to 30 wt.% acrylic resin.

2. Anti-corrosion system according to claim 1, **characterized in that** the two components epoxy -zinc dust basic coating consists of a water dilutable two components epoxy zinc dust priming coat with an epoxy-resin content of 8 to 25 %, a hardener content of 1 to 10 %, from which a mixing ratio in the range of 2:1 to 8:1 results, as well as a pigment-volume-concentration in the range of 10 - 50 Vol.-% and cosolvents.

3. Anti-corrosion system according to claim 1, **characterized in that** the top coating consists of an acrylated expoxide resin in combination with an acrylic resin and pigments, fillers and coloring agents in a pigment-volume-concentration in the range of 10 - 50 Vol.-%.

4. Anti-corrosion system according to claims 1 to 3, **characterized in that** the anti-corrosion system exhibits a total dry layer thickness in the range of 70 to 300 µm with an individual dry layer thickness in the range of 10 µm to 100 µm.

5. Anti-corrosion system for coating of metal surfaces of containers and steel structures, comprising
- a water dilutable two components epoxy-zinc dust basic coating based on a selected combination of a two components epoxy-resin and a hardener, wherein the epoxy-resin exhibits an epoxide equivalent weight of greater than 400 g/mol and comprises a polyamine adduct and/or polyamino amide with an amine equivalent of greater than 120 g/equ as hardener, as well as
- a water dilutable top coating based on a non water-swellable one component-acrylated epoxide resin in combination with an acrylic resin, wherein the binder composition of the top coating consists of 30 wt.% to 70 wt.% acrylated epoxide resin in combination with 70 wt.% to 30 wt.% acrylic resin.

6. Anti-corrosion system according to claim 5, **characterized in that** the two components epoxy-zinc dust basic coating consists of a water dilutable two components epoxy zinc dust priming coat with an epoxy-resin content of 8 to 25 %, a hardener content of 1 to 10 %, from which a mixing ratio in the range of 2:1 to 8:1 results, as well as a pigment-volume-concentration in the range of 10 - 50 Vol.-% and cosolvents.

7. Anti-corrosion system according to claim 5, **characterized in that** the top coating consists of an acrylated expoxide resin in combination with an acrylic resin and pigments, fillers and coloring agents in a pigment-volume-concentration in the range of 10 - 50 Vol.-%.

8. Anti-corrosion system according to claims 5 to 7, **characterized in that** the anti-corrosion system consists of a two-layer system, wherein the dry layer thickness is in the range of 30 to 150 µm with an individual dry layer thickness in the range of 10 µm to 100 µm.

9. Anti-corrosion system according to claims 1 to 8, **characterized in that** the anti-corrosion system exhibits an initial water resistance after 2 hours.

10. Method for producing an anti-corrosion system for metal surfaces, **characterized in that**
- initially, a priming of the containers and steel structures with a water dilutable two components epoxy -zinc dust basic coating based on a selected combination of a two components epoxy-resin and a hardener is carried out, wherein the epoxy -resin exhibits an epoxide equivalent weight of greater than 400 g/mol and wherein a polyamine adduct and/or polyamino amide with an amine equivalent of greater than 120 g/equ is employed as hardener,
- subsequently on the priming coat a water dilutable intermediate coating based on an acrylated epoxide resin with lamellar and spherical pigments and fillers, anti-corrosive pigments and organic inhibitors at a pigment-volume-concentration of 10 - 60 vol.% is applied, as well as
- on the intermediate coating a water dilutable top coating based on a non water-swellable one component-acrylated epoxide resin in combination with an acrylic resin, wherein the binder composition of the top coating consists of 30 wt.% to 70 wt.% acrylated epoxide resin in combination with 70 wt.% to 30 wt.% acrylic resin, is applied,
wherein the drying time of the individual layers is about 15 minutes.

11. Method according to claim 10, **characterized in that** the application of the anti-corrosion system is carried out at temperatures between 5 °C and 30 °C.

12. Method according to claims 10 and 11, **characterized in that** the individual layers of the anti-corrosion systems are dried after application.

13. Method according to claim 12, **characterized in that** the individual layers of the anti-corrosion systems are air-dried after application.

14. Method according to claims 10 to 13, **characterized in that** each layer of the anti-corrosion system is air-dried after application in a temperature range of 10 °C to 80 °C.

15. Method according to claims 10 to 12, **characterized in that** the individual layers of the anti-corrosion system are dried after application by force heat drying at a temperature range of 10 °C to 80 °C.

16. Method according to claims 10 to 15, **characterized in that** the total drying time of the anti-corrosion system is about 45 minutes.

## Revendications

1. Système anticorrosion destiné au revêtement de surfaces métalliques de conteneurs et de constructions métalliques, comprenant :
- une couche d'apprêt époxy-poussière de zinc à 2 composants, diluable dans l'eau, à base d'une combinaison sélectionnée de durcisseur et de résine époxy à 2 composants, sachant que la résine époxy possède une masse équivalente d'époxyde supérieure à 400 g/mol et qu'on utilise comme durcisseur un produit d'addition de polyamine et/ou un polyamino-amide avec un équivalent amine supérieur à 120 g/eq,
- et une couche intermédiaire diluable dans l'eau à base d'une résine époxy acrylée avec des pigments et des charges, des pigments anticorrosion et des inhibiteurs organiques lamellaires et sphériques, avec une concentration pigmentaire volumique de 10 à 60 % (en volume),
- ainsi qu'une couche de finition diluable dans l'eau à base d'une résine époxy acrylée à 1 composant non floculante en combinaison avec une résine acrylique, dont la composition de liant est constituée de 30 % à 70 % (en poids) de résine époxy acrylée en combinaison avec 70 % à 30 % (en poids) de résine acrylique.

2. Système anticorrosion selon la revendication 1, **caractérisé en ce que** la couche d'apprêt époxy-poussière de zinc à 2 composants est constituée d'un apprêt époxy-poussière de zinc à 2 composants diluable dans l'eau avec une teneur en résine époxy de 8 à 25 %, d'une part de durcisseur de 1 à 10 %, de laquelle résultent des proportions de mélange dans la plage de 2:1 à 8:1, ainsi que d'une concentration pigmentaire volumique dans la plage de 10 à 50 % (en volume) et de co-solvants.

3. Système anticorrosion selon la revendication 1, **caractérisé en ce que** la couche de finition est constituée de résine époxy acrylée en combinaison avec une résine acrylique et avec des pigments, des charges et des colorants dans une concentration pigmentaire volumique dans la plage de 10 à 50 % (en volume).

4. Système anticorrosion selon l'une des revendications 1 à 3, **caractérisé en ce que** le système anticorrosion présente une épaisseur du feuil sec total dans la plage de 70 à 300 µm, avec une épaisseur des feuils secs individuels de 10 µm à 100 µm

5. Système anticorrosion destiné au revêtement de surfaces métalliques de conteneurs et de constructions métalliques, comprenant :
- une couche d'apprêt époxy-poussière de zinc à 2 composants, diluable dans l'eau, à base d'une combinaison sélectionnée de durcisseur et de résine époxy à 2 composants, sachant que la résine époxy possède une masse équivalente d'époxyde supérieure à 400 g/mol et qu'on utilise comme durcisseur un produit d'addition de polyamine et/ou un polyamino-amide avec un équivalent amine supérieur à 120 g/eq,
- et une couche de finition diluable dans l'eau à base d'une résine époxy acrylée à 1 composant non floculante en combinaison avec une résine acrylique, dont la composition de liant est constituée de 30 % à 70 % (en poids) de résine époxy acrylée en combinaison avec 70 % à 30 % (en poids) de résine acrylique.

6. Système anticorrosion selon la revendication 5, **caractérisé en ce que** la couche d'apprêt époxy-poussière de zinc à 2 composants est constituée d'un apprêt époxy-poussière de zinc à 2 composants diluable dans l'eau avec une teneur en résine époxy de 8 à 25 %, d'une part de durcisseur de 1 à 10 %, de laquelle résultent des proportions de mélange dans la plage de 2:1 à 8:1, ainsi que d'une concentration pigmentaire volumique dans la plage de 10 à 50 % (en volume) et de co-solvants.

7. Système anticorrosion selon la revendication 5, **caractérisé en ce que** la couche de finition est constituée de résine époxy acrylée en combinaison avec une résine acrylique et avec des pigments, des charges et des colorants dans une concentration pigmentaire volumique dans la plage de 10 à 50 % (en volume).

8. Système anticorrosion selon l'une des revendications 5 à 7, **caractérisé en ce que** le système anticorrosion est constitué d'un système à deux couches, sachant que l'épaisseur du feuil sec total se situe dans la plage de 30 à 150 µm, avec une épaisseur des feuils secs individuels de 10 µm à 100 µm.

9. Système anticorrosion selon l'une des revendications 1 à 8, **caractérisé en ce que** le système anticorrosion est résistant à la condensation au bout de 2 heures.

10. Procédé de fabrication d'un système anticorrosion destiné à des surfaces métalliques, **caractérisé**
- **en ce qu'**on entreprend d'abord l'application d'un apprêt sur les conteneurs et constructions métalliques avec une couche d'apprêt époxy-poussière de zinc à 2 composants, diluable dans l'eau, à base d'une combinaison sélectionnée de durcisseur et de résine époxy à 2 composants, sachant que la résine époxy possède une masse équivalente d'époxyde supérieure à 400 g/mol et qu'on utilise comme durcisseur un produit d'addition de polyamine et/ou un polyamino-amide avec un équivalent amine supérieur à 120 g/eq,
- **en ce qu'**on applique ensuite sur la couche d'apprêt une couche intermédiaire diluable dans l'eau à base d'une résine époxy acrylée avec des pigments et des charges, des pigments anticorrosion et des inhibiteurs organiques lamellaires et sphériques, avec une concentration pigmentaire volumique de 10 à 60 % (en volume),
- et **en ce qu'**on applique sur la couche intermédiaire une couche de finition diluable dans l'eau à base d'une résine époxy acrylée à 1 composant non floculante en combinaison avec une résine acrylique, dont la composition de liant est constituée de 30 % à 70 % (en poids) de résine époxy acrylée en combinaison avec 70 % à 30 % (en poids) de résine acrylique, sachant que le temps de séchage des couches individuelles du système de revêtement est de 15 minutes.

11. Procédé selon la revendication 10, **caractérisé en ce que** l'application du système anticorrosion s'effectue à des températures comprises entre 5°C et 30°C.

12. Procédé selon la revendication 10 ou 11, **caractérisé en ce que** les couches individuelles du système anticorrosion sont séchées après application.

13. Procédé selon la revendication 12, **caractérisé en ce que** les couches individuelles du système anticorrosion sont séchées à l'air après application.

14. Procédé selon l'une des revendications 10 à 13, **caractérisé en ce que** chacune des couches du système anticorrosion est séchée à l'air après application dans la plage de températures de 10°C à 80°C.

15. Procédé selon l'une des revendications 10 à 12, **caractérisé en ce que** les couches individuelles du système anticorrosion sont soumises après application à un séchage forcé à la chaleur dans la plage de températures de 10°C à 80°C.

16. Procédé selon l'une des revendications 10 à 15, **caractérisé en ce que** le temps total de séchage du système anticorrosion est de 45 minutes.
